# EUROPEAN PATENT APPLICATION

(11) **EP 4 574 470 A1**
(43) Date of publication of application: **25.06.2025**
(21) Application number: 24220122.6
(22) Date of filing: 16.12.2024
(51) Int. Cl.: B60G 13/00, B60G 15/06, F16F 9/54, F16F 15/08

(54) **ROAD VEHICLE IMPROVED TO REDUCE VIBRATION AND UNWANTED NOISE IN THE CABIN**

(30) Priority: 18.12.2023 IT 202300027003
(71) Applicant: FERRARI S.p.A., 41100 Modena (IT)
(72) Inventor: BALLATORE, Marco, 41100 Modena (IT); GIORDANI, Mauro, 41100 Modena (IT); PEDRAZA CASTRO, Tomas, 41100 Modena (IT); ROTONDELLA, Vincenzo, 41100 Modena (IT)
(74) Representative: Studio Torta S.p.A.

(57) **Abstract**

A road vehicle comprising two front wheels, two rear wheels, a vehicle body provided with a driver's cabin, and four suspension assemblies configured to support the vehicle body in a suspended configuration and to dampen vibrations transmitted to the cabin; wherein each suspension assembly comprises a first end coupled to a corresponding wheel and a second end coupled to the vehicle body; characterized in that the connection between at least one suspension assembly and the vehicle body comprises:
- an intermediate body interposed between the second end of the suspension assembly and the vehicle body;
- a first elastic element connecting the second end of the suspension assembly to the intermediate body; and
- at least a second elastic element connecting the intermediate body and the vehicle body.

## Description

### CROSS-REFERENCE TO RELATED APPLICATIONS

This patent application claims priority from Italian patent application no. 102023000027003 filed on December 18, 2023, the entire disclosure of which is incorporated herein by reference.

### TECHNICAL FIELD

The technical field of reference of the present invention is that related to road vehicles, in particular sports-type road vehicles. In more detail, the present invention relates to the connection between the suspensions and the vehicle body and addresses the problem of how to perfect such connection so as to reduce vibrations transmitted to the cabin.

### PRIOR ART

As indicated in the previous chapter, the present invention preferably relates to a sports-type road vehicle. The fundamental components forming a road vehicle are well known to the person skilled in the art operating in this technical field. Therefore, for the sake of simplicity, only the components of greatest interest in the implementation of the present invention will be mentioned in the following. In such sense, it is known that a road vehicle comprises two front wheels, two rear wheels, a vehicle body or chassis provided with a driver's cabin and four suspension assemblies configured to support the vehicle body in a suspended configuration and to dampen vibrations transmitted to the cabin. Each suspension assembly comprises a first end coupled to a corresponding wheel and a second end coupled to the vehicle body in the centerline position of the vehicle. In particular, it is for example known to provide a suspension comprising a hub carrier to support the wheel, at least one suspension arm connected to the hub carrier and a shock absorber connected to the hub carrier on one side and connected to the vehicle body on the other side. Therefore, such connection between the suspension assembly and the vehicle body occurs at the second end of the shock absorber. In particular, this connection occurs via a bushing made of elastic material so that the vibrations originating from the wheel side are damped and transmitted to the cabin in a reduced manner. Obviously, the person skilled in the art can choose the elastic characteristic of the bushing according to needs and design parameters. However, the solution just described has limits in the case where the frequency of the impulse generated by the wheel side is very high, for example greater than 800Hz, because in such case the known solution just described is not able to efficiently reduce the impulse transmitted to the cabin with a consequent sharp decrease in the driving comfort.

It should be noted that the condition just described is not a limit configuration which is hardly to occur. In fact, the application of active suspensions in light sports cars leads to the creation of wheel-side impulses of precisely such high frequencies.

The currently known solution provided for reducing such drawback and thus reducing vibrations transmitted to the cabin consists in providing two elastic damping stages in series at the outer connection of the suspension assemblies, i.e. at the connection to the wheel or corresponding axle.

### DESCRIPTION OF THE INVENTION

Based on what described in the foregoing, the object of the present invention is to offer a new and inventive solution to the problem of how to reduce vibrations transmitted to the cabin coming from the suspensions, wherein the driving comfort remains high even with high impulse frequencies. An advantageous application of the present invention are light sports cars provided with active suspensions.

The starting point of the present invention is thus a road vehicle comprising two front wheels, two rear wheels, a vehicle body or chassis provided with a driver's cabin and at least two suspension assemblies configured to support the vehicle body in a suspended configuration and to dampen vibrations transmitted to the cabin. As is known, each suspension assembly comprises a first end coupled to a corresponding wheel and a second end coupled to the vehicle body.

The person skilled in the art is very familiar with the above-listed elements forming a road vehicle and thus no further constructive details are necessary for the correct understanding of the present invention.

The characterizing aspect of the present invention relates to the connection between the suspension assemblies and the vehicle body. In particular, according to the broadest definition of the present invention, it is provided that the connection of at least one of the suspension assemblies to the vehicle body is perfected so as to provide not one but two elastic insulation stages in series, at the attachment point of the suspension to the chassis, so as to attenuate the vibrations generated by the wheel side and transmitted to the cabin. From a structural point of view, the present invention thus provides:
- at least one intermediate body interposed between a second end of a suspension assembly and the vehicle body, constituting a resonant mass at a suitably calibrated frequency, lower than those desired to be further attenuated with respect to the single-stage case;
- a first elastic element interposed between the second end of the suspension assembly and the corresponding intermediate body; and
- at least a second elastic element interposed between the intermediate body and the vehicle body, suitably calibrated with the above-mentioned mass.

In such manner it is possible to lower vibrations in specific frequency bands, with even more than double the effectiveness with respect to the single stage. Furthermore, providing such double damping stage precisely at the connection to the chassis in the centerline of the vehicle greatly reduces vibrations that can be transmitted to the cabin. In other words, along the path of the vibrations from the wheel side towards the cabin, the double damping stage is arranged precisely at the entrance to the vehicle body under the cabin. By way of example, providing for example an elastic constant comprised between 15 and 20 kN/mm for each elastic damping stage, it is possible to filter the vibrations even at frequencies greater than 600Hz.

The double damping stage connection between the second end of the suspension and the vehicle body can be independent for each suspension, i.e. an intermediate body can be provided for each connection between suspension and vehicle body, or a single front intermediate body can be provided which on one side is coupled with two first elastic elements to the front suspensions and on the other side is coupled with two second elastic elements to the vehicle body. In a further embodiment, a similar arrangement can also be provided for the rear suspensions.

Preferably, each suspension comprises a hub carrier to support the corresponding wheel, a suspension arm connected on one side to the hub carrier and on the opposite side to a first end of a shock absorber; wherein the opposite second end of the shock absorber represents the end of the suspension assembly connected to the corresponding intermediate body via the corresponding first elastic element.

Preferably, the above-mentioned elastic elements are bushings made of elastic material.

Preferably, the bushings have axis parallel to the direction of vehicle travel.

Preferably, the vehicle body comprises a fork chassis; wherein the fork chassis is substantially positioned in the centerline of the vehicle below the cabin, wherein the intermediate body is connected by at least two second elastic elements to the fork chassis.

### BRIEF DESCRIPTION OF THE DRAWINGS

In order to better understand the invention, an embodiment thereof will be described in the following by way of non-limiting example and with reference to the accompanying drawings, wherein:
- Figure 1 is a schematic view of front suspension assemblies according to the prior art connected to a chassis body of a vehicle configured to support the vehicle body in a suspended configuration and to dampen vibrations transmitted to the cabin;
- Figure 2 is a schematic view of a portion of the assembly of Figure 1, in which it can be seen how the ends of the front suspension assemblies are connected to the vehicle body according to the prior art;
- Figures 3 and 4 show a schematic comparison between the aforementioned known connection and the connection according to the present invention between the ends of the front suspension assemblies and the vehicle body;
- Figure 5 shows, for the sake of completeness, an example of a suspension which can be improved thanks to the present invention.

### EMBODIMENTS OF THE INVENTION

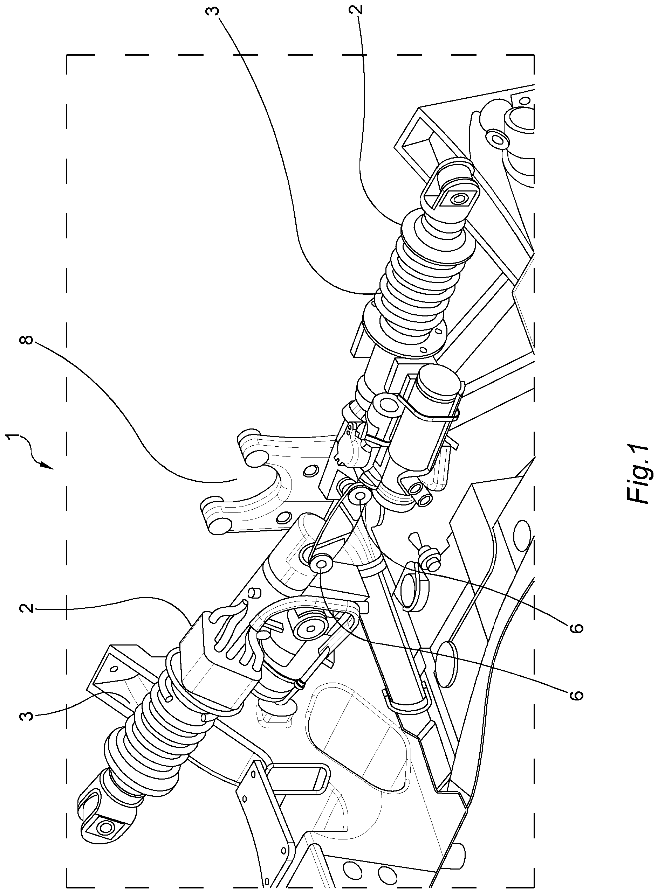

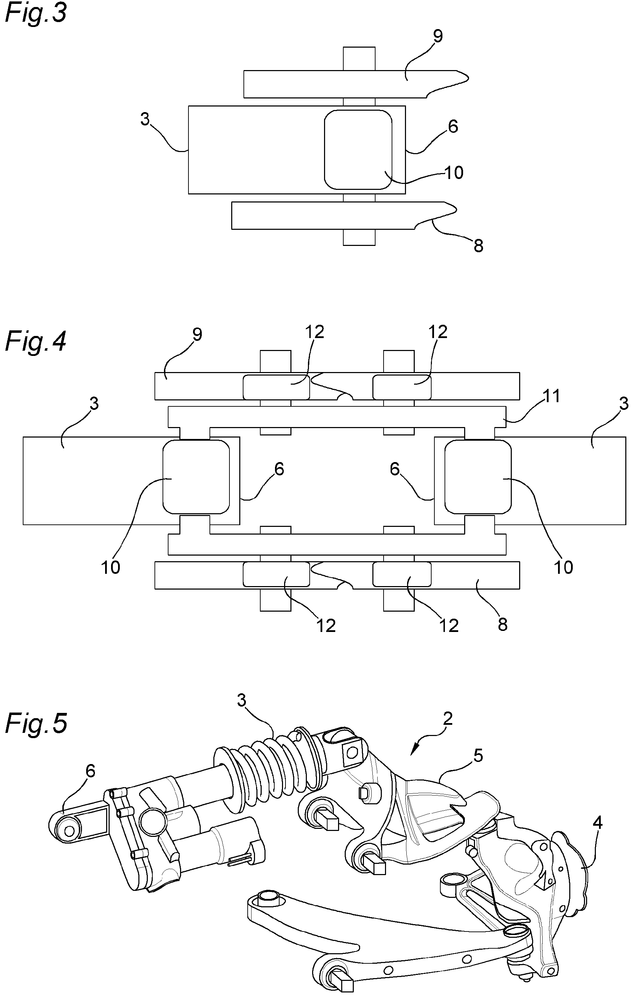

With reference to the accompanying figures, Figure 1 shows a schematic view of two front suspension assemblies 2 connected to a chassis body 1 (fork 8) of a vehicle. As is known, the suspension assemblies are configured to support the vehicle body in a suspended configuration and to dampen vibrations transmitted to the cabin. In this example the two suspension assemblies are represented only by the shock absorbers 3, whereas in Figure 5 a more complete suspension assembly can be seen comprising a hub carrier 4 to support the corresponding wheel, a suspension arm 5 connected on one side to the hub carrier and on an opposite side to a first end 6 of the shock absorber 3. Both the shock absorber 3 shown in Figure 1 and the suspension 2 shown in Figure 5 are merely examples and do not limit the invention relating to the connection between the second end 7 of the shock absorber and the chassis body 1, i.e. in this example the fork 8 located below the cabin.

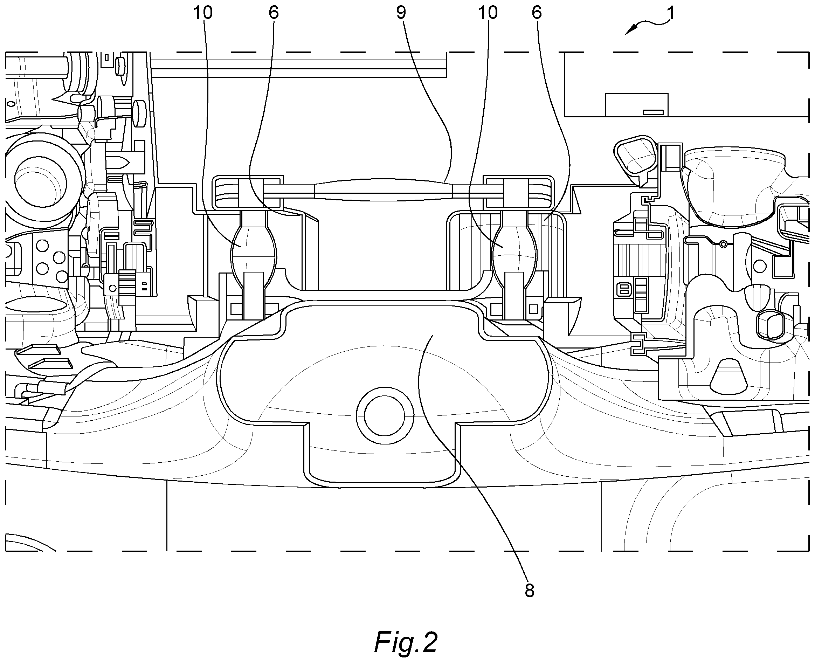

Figure 2 is a schematic view of a portion of the assembly of Figure 1, in which it can be seen how the inner ends 6 of the front suspension assemblies are connected to the fork 8 according to the prior art. Figure 2 shows how the second ends 6 of the shock absorbers 3 are connected via elastic bushings 10 on one side by a connecting rod 9 and on the other side to the fork 8. Figure 3 schematizes such known coupling and makes it clear how, according to the prior art, there is a single elastic element at the connection of the second end 6 of the shock absorber 3 with the fork 8.

Figure 4 instead shows a solution according to the present invention wherein the connection between the front suspension assemblies and the vehicle body comprises:
- an intermediate body 11 (previously not present) interposed between the second ends 6 of the shock absorbers 3 and the fork 8 and the connecting rod 9;
- a first elastic element 10 (i.e. the previously mentioned bushing housed in the second end 6 of the shock absorber 3) interposed (i.e. at the connection) between each second end of the suspension assembly and the intermediate body 11; and
- four second elastic elements 12 (previously not present) of which two interposed (i.e. at the connection) between the intermediate body 11 and the vehicle body 8 and two interposed (i.e. at the connection) between the intermediate body 11 and the connecting bridge rod 9.

Although not shown (because absolutely within the reach of the person skilled in the art), the present invention also extends to other embodiments which, starting from the general concept of the intermediate body interposed between the second end of the suspension assembly and the vehicle body with double suspension stage, have particular characteristics. For example, embodiments are possible in which such arrangement with double damping stage in series can also be provided in the rear suspensions as well as at the outer ends of the front and/or rear suspensions. In detail, there are at least three embodiments that deserve to be explicitly mentioned and claimed, namely:
1) The intermediate body with double insulation could be made not only as a single central mass but also as two separate masses on corresponding suspensions not necessarily converging on the car center but elsewhere on the vehicle body;
2) The intermediate body is not necessarily an element added to the vehicle (previously not present) but its function can be carried out by a component already present in the vehicle, for example an ECU, with suitable structural adaptations to include the double damping stage; in this embodiment weight is saved by not adding other elements to the vehicle;
3) The double insulation made in such manner can also integrate connections with others of the vehicle to further insulate the cabin from undesired noise: in addition to the mentioned electric axle, also a power unit and/or auxiliary systems such as the compressor of the air conditioning unit.

Finally, it is clear that modifications and variations can be made to the invention described herein which however do not depart from the scope of protection defined by the claims.

## Claims

1. A road vehicle comprising two front wheels, two rear wheels, a vehicle body (8) provided with a driver's cabin, and at least two suspension assemblies (2) configured to support the vehicle body (8) in a suspended configuration and to dampen vibrations transmitted to the cabin; wherein each suspension assembly (2) comprises a first end (4) coupled to a corresponding wheel and a second end (6) coupled to the vehicle body (8) ; and a power unit, preferably located between at least one pair of wheels, **characterized in that** the connection between at least one suspension assembly (2) and the vehicle body (8) comprises:
- an intermediate body (11) interposed between the second end (6) of the suspension assembly (2) and the vehicle body (8) ;
- a first elastic element (10) connecting the second end (6) of the suspension assembly (2) to the intermediate body (11); and
- at least a second elastic element (12) connecting the intermediate body (11) and the vehicle body (8).

2. Vehicle as claimed in claim 1, wherein each suspension (2) comprises a hub carrier (4) to support the corresponding wheel, a suspension arm (5) connected on one side to the hub carrier (4) and on the opposite side to a first end of a shock absorber (3); wherein the opposite second end (6) of the shock absorber (3) is connected to the corresponding intermediate body (11) via the corresponding first elastic element (10).

3. Vehicle as claimed in any of the preceding claims, wherein the elastic elements (10, 12) are bushings made of elastic material.

4. Vehicle as claimed in claim 3, wherein the bushings (10, 12) have axis parallel to the direction of vehicle travel.

5. Vehicle as claimed in any of the preceding claims, wherein the second ends (6) of the front suspension assemblies (2) are connected by corresponding first elastic elements (10) to two corresponding front intermediate bodies (11) not necessarily converging on the car centerline but elsewhere on the vehicle body (8).

6. Vehicle as claimed in any of the preceding claims, wherein the second ends (6) of the front suspension assemblies (2) are connected by corresponding first elastic elements (10) to a single front intermediate body (11), preferably arranged in the centerline of the vehicle.

7. Vehicle as claimed in any of the preceding claims, wherein the vehicle body (8) comprises a chassis with a fork (8, 9) or cantilevered coupling; wherein the chassis is substantially positioned in the centerline of the vehicle below the cabin, wherein the intermediate body (11) is connected by at least two second elastic elements to the chassis.

8. Vehicle as claimed in any of the preceding claims, wherein the second ends of the rear suspension assemblies (2) are connected by corresponding first elastic elements (10) to a single rear intermediate body (11).

9. Vehicle as claimed in any of the preceding claims, wherein a second source of vibration in addition to the suspension assembly, particularly an electric axle or a power unit, is coupled to the intermediate body (11) connected in a damped manner to the chassis (8).

10. Vehicle as claimed in any of the preceding claims, wherein the intermediate body (11) is a component already in the car, particularly a control unit.

11. Vehicle as claimed in any of the preceding claims, wherein there is more than one intermediate body (11) with double damping to also support systems other than the axle, particularly a power unit and/or a compressor of an air conditioning unit.
